# EUROPEAN PATENT APPLICATION

(11) **EP 1 175 069 A1**
(43) Date of publication of application: **23.01.2002**
(21) Application number: 01904439.5
(22) Date of filing: 14.02.2001
(51) Int. Cl.: H04L 29/06, H04L 12/02, H04N 7/173, H04H 1/08

(54) **MOBILE COMMUNICATION NETWORK ADAPTER**

(30) Priority: 28.02.2000 US 514705
(71) Applicant: MITSUBISHI DENKI KABUSHIKI KAISHA, Tokyo 100-8310 (JP)
(72) Inventor: MATSUBARA, Fernando M., Santa Clara, CA 95054 (US); POON, Tommy C., Murray Hill, NJ 07974 (US)
(74) Representative: Pfenning, Meinig & Partner
(86) International application number: JP0101043
(87) International publication number: WO0165803

(57) **Abstract**

A mobile network adapter includes a wireless port (121) and an appliance port (111). The appliance port (111) is configured to physically connect to a wireless mobile communications device (120) such as a cellular telephone. The wireless mobile communications device (120) is configured to communicate with a network content provider via a base station (130). The appliance port (111) is configured to connect with an appliance (111) such as a television. The adapter also includes an upstream protocol stack configured to generate Internet Protocol data. The Internet Protocol data is transmitted to a network content provider via the wireless mobile communications device (120) and the base station (130) using an upstream communications path. The network content provider, in response to the Internet Protocol data transmits network content to the appliance (111) via a downstream communications path.

## Description

### Technical Field

The present invention relates generally to network architectures, and more particularly to an adapter for interacting with broadcast networks and the Internet using mobile telephone networks.

### Background Art

In the field of consumer electronics and access devices for multi-media content, three types of networks dominate, the broadband broadcast networks, the baseband point-to-point Internet, and telephone networks. Unfortunately, consumer devices designed to access content from one network generally do not work well with other networks, if at all.

The most common consumer device used to access content of the broadcast network is the television. However, televisions do not compute, nor can one receive or originate telephone calls with televisions. Recently, Web television devices (Web TV® ) have been introduced to provide access to Internet content. Web TV devices are designed as special purpose stationary devices only good for home use. Web TV requires a dedicated phone line, a 56Kbps modem, a 150+ MHz processor, and about 10Mb of memory. Web TV has limited functionality primarily related to downloading Web content and e-mail. Nor, does Web TV provide mobile access capabilities. That is, it is impractical for a user to carry a Web TV to different locations and reconfigure the device every time.

For Internet access, the most common device is the personal computers or laptop. Typically, a Web browser such as the Netscape Navigator^{(™)} provides a graphic user interface (GUI). There are a number of problems with this type of Internet access. Specialized equipment is required.

Compared to other user appliances, such as televisions and telephones, computers need a lot of attention and special hardware. Computers need software loaded. The systems needs to be configured. Operating systems need frequent updates. Often, software updates also dictate hardware updates. The system needs to go through a lengthy start-up sequence before it is usable. Likewise, at the end of a session, just turning the power off can make the device unusable. More typically, a shut-down procedure needs to be executed. There is no instant ON/OFF. During use, computers frequently "freeze" for unknown reasons. The user needs to make arrangement with an ISP. A connection with the ISP usually requires some modem, cable, DSL, or dial-up telephone line. The ISP may not be available at every location. In sum, accessing the Internet, via a conventional computer system requires a reasonably sophisticated user.

It is possible to access some broadcast television programming via the Internet, but the quality, and speed of delivery is poor. Generally, PC's are not configured or designed as "entertainment centers." For a standard PC configuration, with a system box, disk drives, a printer, a monitor, a mouse, a cable modem, and speakers, mobility is problematic. In the case where the equipment is portable, the quality of the video and audio interface suffers severely.

More recently, wireless cellular telephones (cellphones) and personal digital assistants have been provided with Internet access capabilities. These devices provide access to messaging services, as well as Internet content. These devices have their own set of problems. They cannot be used as a network computer. Typically, they cannot be linked to broadcast service providers. And, most important, their display screens are of limited size, hardly suited for use as an entertainment device. The concept of curling up on a couch with a PDA to watch a newly released movie or listen to a CD does not seem compelling.

Internet telephone services have also become available, but again the quality of the services suffers severely, particularly for what should otherwise be a normal two-way conversation. The packet switching nature of the Internet is not geared to the concurrent delivery of two-way streamed content.

Therefore, there is a need to provide a mobile network architecture that provides quality concurrent access to both broadcast, Internet, and telephone network content. The user interface should be simple and flexible with built-in security constraints.

### Disclosure of Invention

A mobile network adapter includes a wireless port and an appliance port. The appliance port is configured to physically connect to a wireless mobile communications device such as a cellular telephone. The wireless mobile communications device is configured to communicate with a network content provider via a base station. The appliance port is configured to connect with an appliance such as a television. The adapter also includes an upstream protocol stack configured to generate Internet Protocol data. The Internet Protocol data is transmitted to a network content provider via the wireless mobile communications device and the base station using an upstream communications path. The network content provider, in response to the Internet Protocol data transmits network content to the appliance via a downstream communications path.

### Brief Description of the Drawings

Figure 1 is a block diagram of a mobile network architecture according to the present invention;
Figure 2 is a block diagram of upstream protocol stacks used by the architecture of Figure 1;
Figure 3 are perspective views of docking ports used by the invention;
Figure 4 is a diagrammatic of an alternative embodiment of a docking port;
Figure 5 is a block diagram of pin assignments used by the docking ports of Figures 3 and 4;
Figure 6 is a block diagram of downstream protocol stacks used by the architecture of Figure 1;
Figure 7 is a block diagram of upstream and down stream paths over a mobile communications network;
Figure 8 is a block diagram of protocol stacks of the arrangement of Figure 7; and
Figure 9 is a block diagram of a preferred embodiment of a user appliance in the networks of Figure 1.

### Best Mode for Carrying Out the Invention

### EXAMPLE 1

### Network Architecture Overview

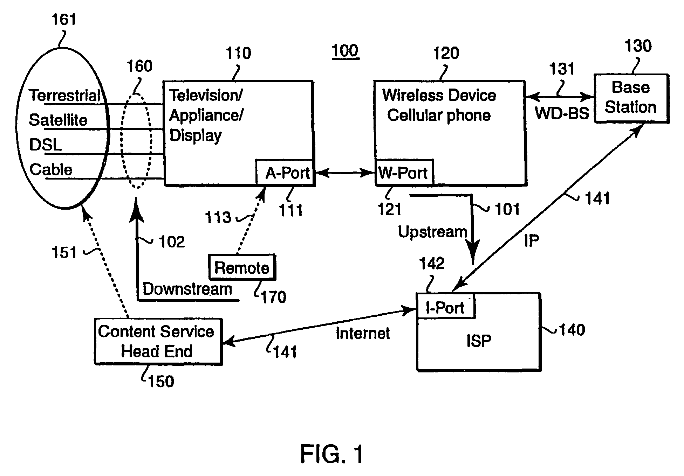

Figure 1 shows a network architecture 100 according to our invention. At a minimum, our arrangement 100 includes a user appliance 110, and a wireless mobile communication device 120 physically coupled to each other via an appliance port (A-Port) 111 and a wireless port (W-Port) 121 via a physical link 103.

This combination can be used to access broadcast network content and Internet content using a mobile communications network, as described in greater detail below. As an advantage, the architecture according to our invention is complete mobile. A user can simply connect a cellphone to the appliance, e.g., a television, and operation can proceed without the user having to run complicated start-up, log-in, or configuration procedures. Security is guaranteed, when the user removes the phone from the TV, operation is terminated, although the appliance can still be used in its traditional stand-alone mode. Access to network content can be any place where broadcast televisions signals are received, and cellular phones are enabled, which includes most locations in developed nations.

In a preferred embodiment, the consumer appliance 110 is a television adapted as described herein. Alternatively, the appliance can be a radio, a CD player, or a household appliance such as refrigerator, stove, washing machine, video camera, or a mobile appliance such as might be installed in an automobile, truck, or boat, for example a navigation system, or a television. Here, of course, a mobile operation is an essential requirement.

The appliance 100 can be controlled with a remote control device 170. The "remote" controls the appliance via communications path 113, e.g., an infrared or RF channel. The remote can use legacy commands such as volume and channel select, and IP command to enable Internet access, e.g., Back, Forward, Reload, Home, , Search, Security, Shop, character input, etc. The later commands are usually sufficient to operate any standard Internet browser, and to receive and generate IP content, data, or control information.

The wireless device 120 communicates with a base station 130 using standard communication schemes (WD-BS) 131, for example, schemes such as Time Division Multiple Access (TDMA), Frequency Division Multiple Access (FDMA), Code Division Multiple Access (CDMA), Orthogonal Frequency Division Multiplexing (OFDM), Multi Carrier CDMA (MC-CDMA), AMPS, CDPD, PCS, W-CDMA, and the like. Typically, the wireless device 120 is a cellular telephone.

The base station 130 communicates with an Internet Service Provider (ISP) 140 via layer three of the Internet Protocol (IP) 141, e.g., IETF RFC791. The ISP can communicate with a broadcast content service head end 150 also via the IP protocol 141. Internet traffic is communicated via routers and wide area networks, these are well known. The head end provides television broadcast signals 160 using terrestrial, cable, digital subscriber line (DSL), or satellite broadcasting techniques 161.

It should be noted that with the rapidly changing multi-media industry, in many cases, the telephone network content/access, the internet network content/access, and the broadcast network content/access are just different operating division of the same business enterprise. Thus, hereinafter when we refer to a network content provider, it should be understood that the content can originate via an ISP, a telephone network operator, or a traditional broadcaster.

Our architecture 100 also provides for an upstream path 101 from the wireless device 120 to the ISP 140, and a downstream path 102 from the head end 150 to the appliance 110. In the preferred embodiment, the upstream path carries low-bandwidth control information using the Internet Protocol, or alternatively IP data intended for other destinations. In this case, the IP data is content generated by the appliance under user control, i.e., "appliance data." The downstream path carries high-bandwidth network content (broadcast or Internet) responsive to the control information.

### Network Operation Overview

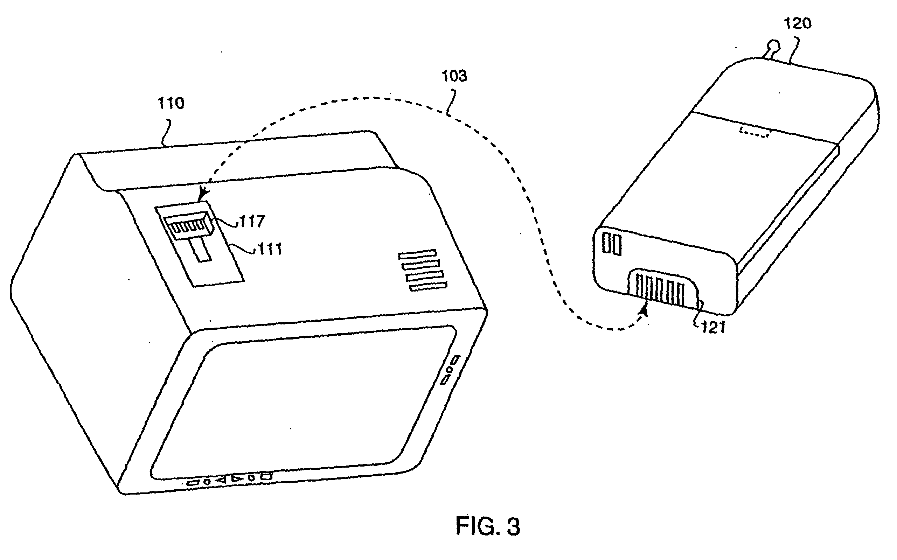

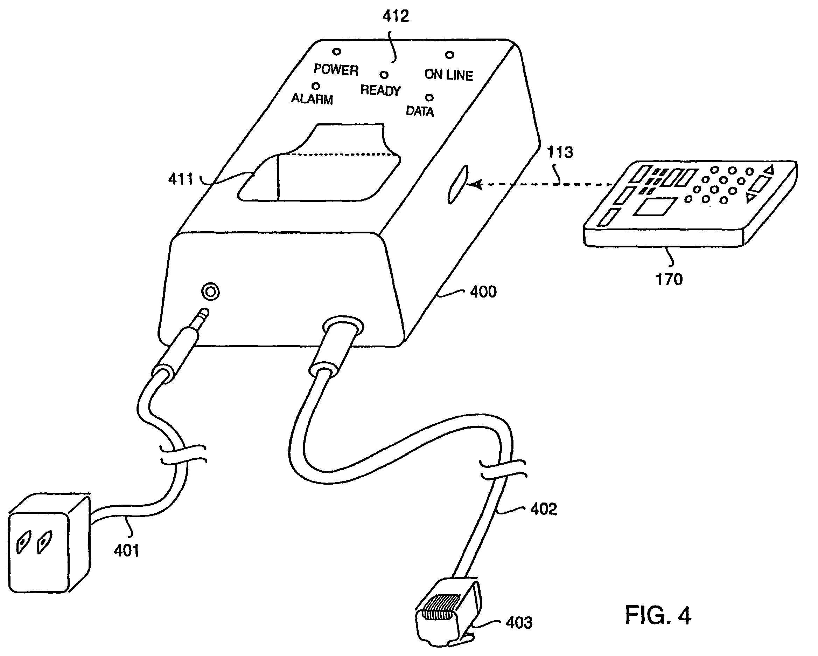

During operation, the user establishes a bi-directional communication path with a preferred Internet Service Provider. In other words, the user simply makes a mobile telephone call. At this point, the cellphone is inserted in a docking port of the appliance, see Figures 3 and 4. From, this point on, the cellphone can be powered via the appliance.

The appliance 120 is normally connected to receive network content using the high speed downstream path 102. For example, the appliance is a television receiving ATSC data broadcasting or direct broadcasting satellite (DBS) broadcast via an antenna, or cable channels via a cable connection. The delivery network is normally a shared delivery medium, supporting higher speeds than those supported by the wireless network 130-131.

The appliance and wireless device serve as the originating point for the upstream path 101. The upstream path typically transmits small amounts of control information, e.g., remote commands, Universal Resource Identifiers (URIs), and Universal Resource Locators (URLs), to the ISP 140, while the bulk of the content, e.g., Web pages with images, video, or audio, is sent downstream over the high speed broadcast delivery network. The pages can be in HTML, XML, or Wireless Mark-up Language (WRL), As stated above, the TV/cellphone combination can also originate other data intended for any other destination having a network destination address, i.e., an IP address or a telephone number.

After the cellphone has established contact with the ISP, the ISP can request configuration data. The configuration data includes appliance specific parameters, as well as cellphone parameters for security and accounting purposes. At this point, the user can start accessing network content.

### Protocol Stack Cellular Upstream

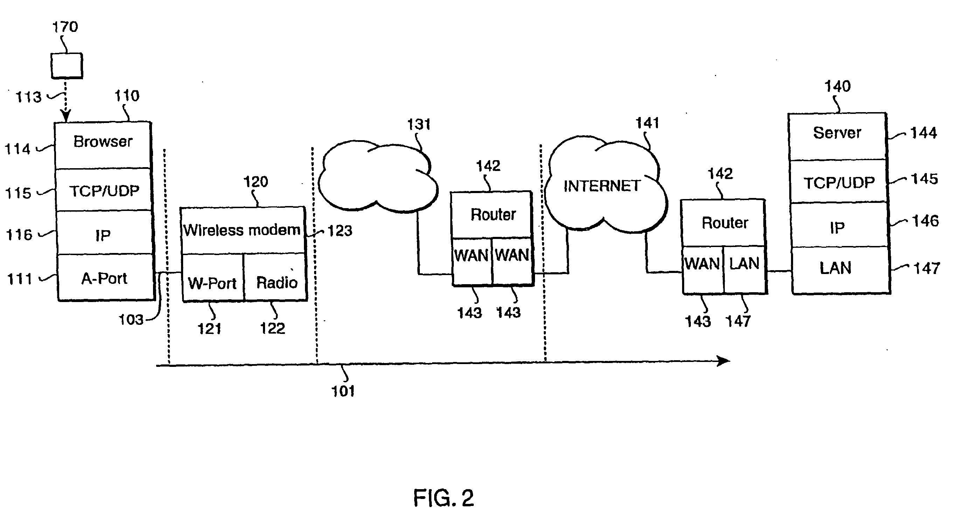

Figure 2 shows the protocol stacks of the upstream path 101 according to the invention. In the appliance 110, the protocol stacks include an application (browser) layer 114, a TCP/UDP layer 115, IP layers 116, and the physical layers of the A-Port 111. The mobile device 120 includes the W-Port layer 121, a radio transceiver layer 122, and a wireless modem layer 123. The ISP and the Internet operate via routers 142 and wide area networks 143. These are standard. The ISP 140 includes complementary layers 144-146, and a local area network (LAN) layer 147. When a request from the appliance 110 reaches the ISP 140, a decision whether to use cellular downstream or broadband downstream is made based on appliance capability information. Appliances able to receive MPEG TS such as ATSC, Digital Cable and DBS can take advantage of the high speed broadband downstream path.

### Application Layer

The application layer 114 of the appliance can execute a browser 114, e.g., Netscape Navigator. The browser is the first application to be launched after a TCP session is established with the head end via the upstream IP path 101. The browser has two basic functions. The browser provides the initial user interface for a user to select and navigate through various services and applications using the remote 170. Some services can reside in non-volatile memory in the appliance 110, as described below, other services can be downloaded via the broadcast network.

The browser can use the Wireless Application Protocol (WAP) and the Wireless Markup Language (WML). WML is based on XML. WML enables easy navigation, using pointers, for devices that have no keyboards. WAP provides the opportunity to display Web content the mobile end user appliances using a specific WAP-Browser. The respective content can be downloaded by a WAP-Servers executing at the ISP. WAP supports wireless services, such as SMS and GPRS, as well as mobile network standards, e.g., GSM, CDMA, UMTS). The protocol meets the requirements of the low bandwidth and high-latency upstream data path.

Another function of the browser is to act as an interface to customize presentation and application settings according to user preferences. These settings should not be confused with initial network configuration or set-up. The architecture 100 does not require any configuration or set-up because the wireless device is authorized by a cellular network service provider. The provider manages the configuration, set-up, IP address assignment, if any, and all security/authentication/billing provisions. The "application" at the ISP is the server 144, e.g., the Apache public domain HTTP daemon.

### TCP/UDP Layer

The TCP/UDP layer 115 is defined in the IETF RFC 768 User Datagram Protocol (UDP), and the RFC 793 Transmission Control Protocol (TCP), respectively. Upstream TCP or UDP data are sent via the wireless device through the WD-BS interface 131. Downstream TCP or UDP data can be sent either via the WD-BS interface or via the broadband downstream path 102. In the broadband downstream case, UDP data for IP multicast and broadcast multicast are embedded in a principal service stream e.g., the MPEG transport stream.

### IP Layers

The IP layers 116 are defined in the IETF RFC 791 Internet Protocol. Note, complementary application, TCP/UDP, IP layers 152-154 exist in the head end 150.

### LAN

In the ISP and head end, the physical layers 147 are connected via a LAN.

### Docking Ports Physical Layer

Figure 3 shows the physical arrangement of the docking ports 111 and 121. In one embodiment, the appliance 110 includes a receptacle 117 into which the bottom of the wireless device 120 can be inserted. Complementary sets of pins, described in greater detail below, complete the link 103.

### Docking Cradle and Network Adapter

Figure 4 shows an alternative embodiment including a docking cradle 400 with a receptacle 411 for receiving the bottom of the wireless device. The cradle can be equipped with a power connector 401, and a signal connector 402 using for example a male RJ45 connector 403 for connecting with the appliance. The docking cradle 400 can also include appropriate indicator lights 412. Of course, in this embodiment, the remote 170 communicates 131 directly with the cradle, and not the appliance.

As an advantage of this arrangement, the docking cradle 400 is the means that can adapt any prior art appliance to our invention, and only the cradle needs to conform to the form factor of the wireless mobile communications device. In other words, the cradle is a "network adapter." That is, the docking cradle can include the hardware and software components of the appliance protocol layers as shown in Figures 2,6, 8, and 9.

In this embodiment the appliance can be any legacy appliance, and the connection to the appliance from the cradle can be any standard composite video, S-video and audio connector 403. In other words, with this arrangement, the mobile user only needs to transport the cradle and a cellphone to enable the networking according to our invention. Hereinafter, when we refer to the appliance, we mean both a standalone appliance as in Figure 3, and a prior art appliance adapted with the embodiments as shown and described herein.

### Docking Port Signal Pins

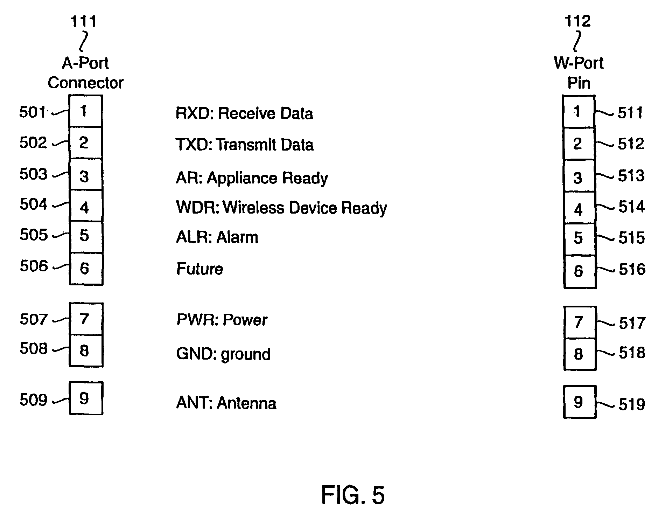

Figure 5 shows one possible arrangement for the pins (1-9) of the appliance and wireless device. The pins 1-9 include the appliance pins 501-509 and complementary pins 511-519 of the mobile device. Pins 1-2 carry receive data signals and transmit data signals emulating, for example, a RS-232 serial protocol. Serial line control is implemented using pins 3-4.The A-port puts a positive voltage on pin 3 to indicate the appliance is ready to receive data. In the same manner, the W-port puts a positive voltage on pin 4 called to indicate to the wireless device is ready to receive data.

When the wireless device is unable to establish Internet connectivity, an alarm condition will be triggered on pin 5. Under normal operation the wireless device puts a positive voltage in pin 5. A zero voltage on pin 5 indicates an alarm condition.

Pin 7 is used for power to the wireless device to recharge its battery. Pin 8 is used for both signal ground and power ground. Pin 9 is used when an extension to the antenna of the wireless device is required. Under some circumstances, such as physical location inside a building, or particular orientation of the appliance, the wireless device's own antenna might not be able to receive a strong enough signal. Instead of trying to change the orientation of the appliance itself, an antenna extension can be wired to a terminal connector in the appliance, e.g., the back of the television. This terminal is wired to pin 9 in the docking port. In alternative embodiment, the link 103 can use USB or IEEE 1394 protocols.

### Protocol Stack Broadband Downstream

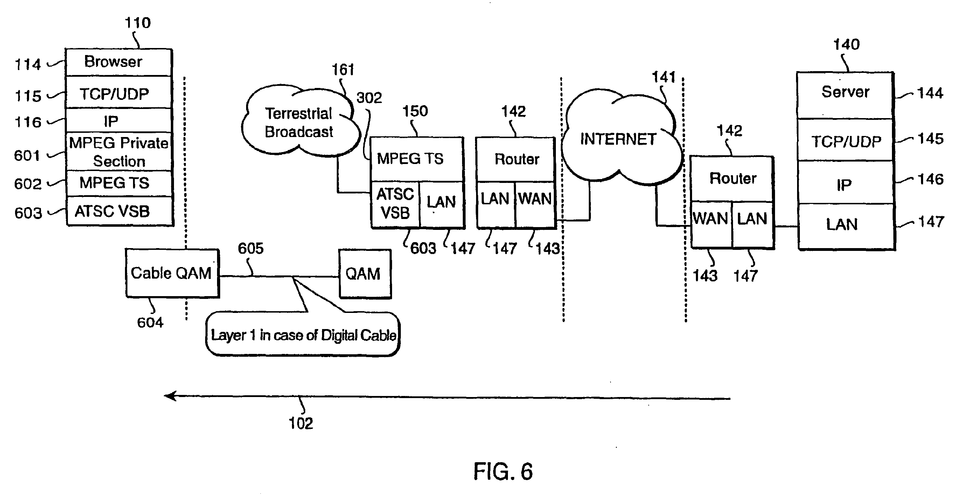

Figure 6 illustrates layers of the downstream path 102. After the ISP 140 receives the requests via cellular upstream, e.g., an URL from the appliance 110, it fulfills the request by collecting Web content corresponding to the URL, and sending the content to the appliance via broadband downstream 102. Necessary modifications to the IP packet headers are made to send data via the downstream broadband path 102.

Only those layers that are significantly different from the layers of Figure 2 are described. Layer 601 is the MPEG Private Section as defined in ISO/IEC 13818 MPEG-2 Part1. Layer 602 is the MPEG TS (Transport Stream) as defined in ISO/IEC 13818 MPEG-2 Part1. Layer 603 is the ATSC VSB (Vestigial Sideband) as defined in ATSC A/53, ATSC Digital Television Standard. Layer 604, in case of a cable implementation 605 is Cable QAM (Quadrature Amplitude Modulation) as defined in the Open Cable specification by Cable Television Laboratories, Inc. IS-N-INT01-991021 OCI-N Cable Network Interface Specification.

### Cellular Upstream - Cellular Downstream

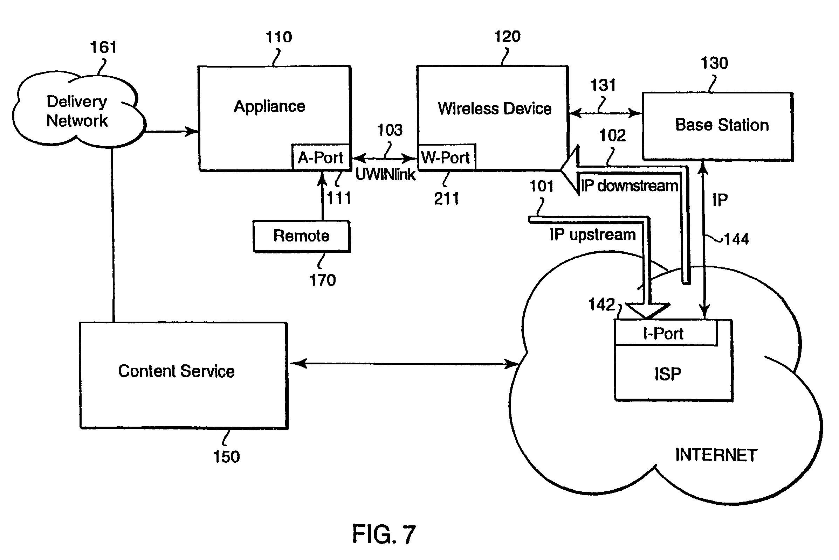

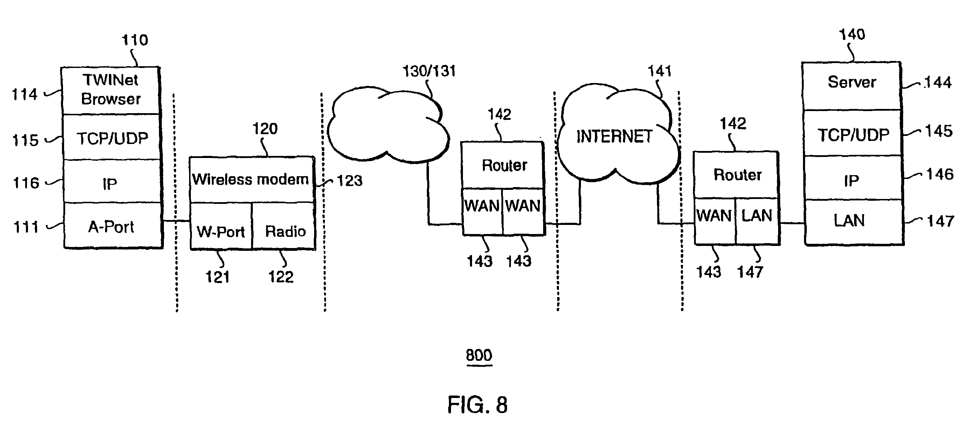

Figure 7 shows an arrangement 700 where the content service and delivery network 161 is unable or unwilling to handle the downstream channel, e.g., legacy NTSC broadcast television networks. In this case, the wireless (cellular) network provides both the upstream and downstream channels 101-102 for the Internet content. Figure 8 shows the protocol 800 for the arrangement of Figure 7.

### Television Appliance

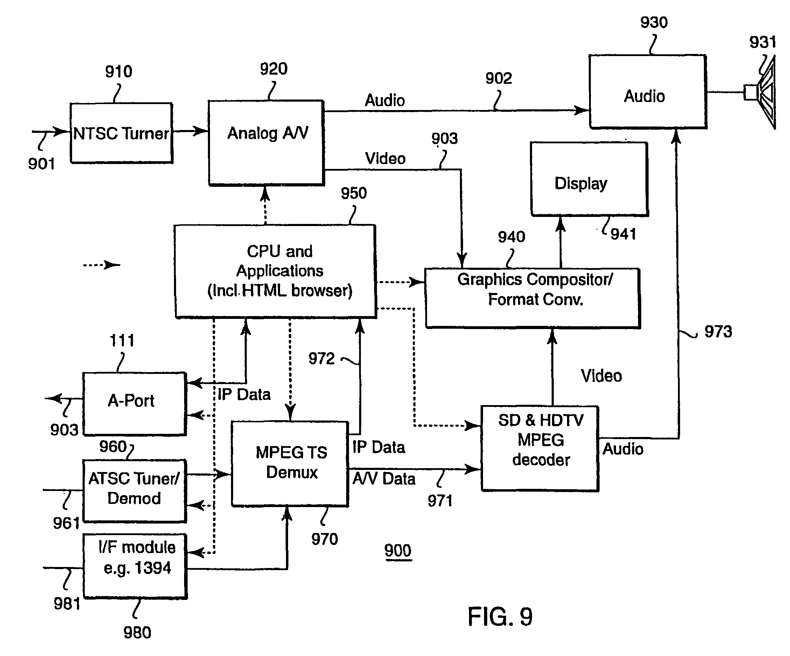

Figure 9 shows an arrangement 900 where the appliance is a television. In Figure 9, the dotted lines indicate control signals. In this case, the appliance 110 includes a NTSC tuner 910 connected to an antenna 901 and an analog audio/visual (A/V) circuit 920. The output of the A/V circuit is connected to an audio circuit 930 and speaker 931, and a digital video circuit (graphics compositor/format converter) 940 and display 941.

The tuner 910 receives an analog RF signal via the antenna 901 or a cable, not shown. The tuner selects by a filtering mechanism a single NTSC analog signal corresponding to a television channel. The analog A/V circuit decodes the NTSC baseband signal coming from the NTSC tuner. The demodulated NTSC signal is a composite signal defined in the SMPTE-170M standard comprising an audio component (Stereo, Mono, Pro-logic) 902, and a video components 903, e.g., NTSC video, VBI data.

The audio circuit processes the audio signal 902 for output on the speaker 931. The video circuit 940 processes the video signal for the display 941. The interface to the display is implementation dependent, for example, it can be YPbPr or RGB.

### CPU and Applications

The appliance 110 also includes a central processing unit and memory 950. The CPU 950 includes a processor, e.g., MIPS architecture R5000 class 250MIPS or higher, software drivers to command hardware devices such the analog A/V 920, the A-Port 111, an ATSC Tuner/Demodulator 960, the video circuit 940. The CPU 950 also includes real-time operating system (RTOS) software, e.g., VxWorks, and application software such as the browser 114, a download controller, an AV system controller, electronic program guide (EPG) software, on-screen display (OSD), and home networking modules.

Serial driver software, e.g., RS-232, to support the protocol on the A-Port and W-port resides in the CPU and the associated application software. The CPU controller (i.e. the chip controlling the CPU) typically supports two RS-232-C ports. Connectors in the A-Port are wired to terminals in the CPU controller.

### ATSC Tuner/Demodulator

Depending on a user selection, the ATSC tuner/demodulator 960 tunes to the a corresponding channel. A signal received via an antenna 961 is VSB-modulated. The signal is passed to a demodulator which extract a bit stream in the MPEG TS format. A DBS Satellite tuner or a Digital Cable tuner, or both, can be embedded in the appliance instead of, or in addition to, the ATSC tuner/demodulator, providing alternative MPEG TS sources to the MPEG TS demultiplexer 970.

### MPEG TS Demux

A MPEG demultiplexer 970 demultiplexes the MPEG TS signal to produce a program streams containing multimedia content, e.g., audio and video 971, and IP data 972. A single TS can have multiple program streams.

### SD and HDTV MPEG decoder

A SD and HDTV MPEG decoder, depending on the input signal, produces a signal (SD or HD) in a format suitable for the display 941. The audio signal 973 is supported typically in a separate decoder able to produce up to 5.1 independent channels, e.g. Dolby AC-3.

### I/F Module (1394)

An I/F module 980 supports an external digital interface to connect devices such as cable or satellite set-top boxes to via an IEEE 1394 connector 981. This module transport data in digital formats, such as MPEG for digital TV content.

### Graphics Compositor / Format Conversion

The compositor 940 combines input from a wide variety of graphic sources available. For example for video: SD, e.g., 480p, HD, e.g., 1080I , analog NTSC. In case of graphic user interface or a Web browsers, the combinations are varied. Typical examples of applications are picture-in-picture (PIP), Web content combined with DTV in a window, and so forth.

As stated above, the hardware and software components of Figure 9 necessary for IP access, e.g., the CPU, ATSC tuner, NTSC encoding, graphics compositor, etc., can be located in the docking cradle 400 of Figure 4 to enable the mobile user to adapt prior art appliances to our network architecture.

### Industrial Applicability

### Features and Advantages

Our architecture, as described above, has a number of distinguishing features and advantages over prior art networks. Any television, or any other appliance, once equipped with the A-port and circuits as shown in Figure 8 can be turned into an Internet device when the wireless mobile device 130 is plugged into the appliance. Using the protocol stacks, the appliance and wireless communication device operate as a single unit. That is, the relative small cellular phone provides the user with stereo and full screen high quality multi-media delivery, unlike prior art dedicated single use devices.

Using the identification of the wireless device, i.e., its telephone number, the ISP can access a user profile, to custom design the graphic user interface. Thus, if the user is mobile, for example, staying at a hotel, the graphic interface seen by the user will be familiar. Services such as e-mail, video conferencing, Internet browsing are easily accommodated with tailored interfaces. As opposed to traditional implementations, secure information can be transferred, to and from the appliance, from any location with the wireless device has access to the base station. Billing becomes trivial.

Our architecture uses the two common user devices, the television, and the cellphone. If the appliance is a television, Internet access is gained by simply plugging the cellular phone into the docking port. As an additional feature, the physical connection at the docking ports can allow the wireless device to be recharged while in use. This is not possible with other solution, such as specified in the BlueTooth standard. Moreover, when separated, the appliance and wireless device can continue to operate independently with their traditional functionalities.

### Other Application

Other applications that can use our invention include low cost video phone and web access, and return channels for NTSC/ATSC signals. Our architecture provides personal services at home, in hotels, in cars, or any other locality used by a mobile user.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A mobile network adapter, comprising:
a wireless port (121) configured to physically connect to a wireless mobile communications device (120), the wireless mobile communications device (120) configured to communicate with a network content provider via a base station (130);
an appliance port (111) configured to connect with an appliance (111); and
an upstream protocol stack configured to generate Internet Protocol data, the Internet Protocol data to be transmitted to a network content provider via the wireless mobile communications device (120) and the base station (130) using an upstream communications path, and the network content provider, in response to the Internet Protocol data to broadcast network content to the appliance (111) via a downstream communications path.

2. The mobile network adapter of claim 1 further comprising:
a remote control device (170) to communicate with the upstream protocol stack, the remote control device to transmit Internet Protocol commands to the upstream protocol stack, and the upstream protocol stack to generate the Internet Protocol data in response to the Internet Protocol commands.

3. The mobile network adapter wherein the appliance (111) is a television and the upstream protocol stack includes a browser, and the network content includes Web pages with images and text to be displayed on the appliance (111).

4. The mobile network adapter of claim 3 wherein the upstream protocol stack further comprises:
an application layer for executing the browser;
a TCP/UDP layer;
Internet Protocol layers; and
a physical layer.

5. The mobile network adapter of claim 3 wherein the Web browser provides a user interface configured according to user preferences associated with the wireless mobile communications device (120).

6. The mobile network adapter of claim 1 wherein the appliance port (111) and the wireless port (121) include pins for carrying receive data, transmit data, an appliance ready signal, a wireless mobile communications device (120) ready signal, an alarm signal, a power signal, a ground signal, and an antenna signal.

7. The mobile network adapter of claim 1 further comprising:
a central processing unit and memory for executing software programs;
a digital video circuit;
an ATSC tuner/demodulator;
a MPEG demultiplexer; and
an MPEG decoder produces a digital video signal for the digital video circuit, and where the digital video circuit, the ATSC tuner/demodulator, the MPEG demultiplexer, and the MPEG decoder are controlled by the central processing unit.
